(19) Europäisches Patentamt / European Patent Office / Office européen des brevets

(11) **EP 2 751 949 B1**

(12) **EUROPEAN PATENT SPECIFICATION**

(45) Date of publication and mention
of the grant of the patent:
**01.08.2018 Bulletin 2018/31**

(21) Application number: **12827225.9**

(22) Date of filing: **29.08.2012**

(51) Int Cl.:
*H04L 9/06* (2006.01)     *H04L 9/08* (2006.01)
*G06F 17/30* (2006.01)     *G06Q 20/34* (2012.01)
*G06Q 20/38* (2012.01)

(86) International application number:
**PCT/US2012/052892**

(87) International publication number:
**WO 2013/033235 (07.03.2013 Gazette 2013/10)**

(54) **MULTIPLE TABLE TOKENIZATION**

TOKENISIERUNG MEHRERER TABELLEN

TOKÉNISATION BASÉE SUR UNE PLURALITÉ DE TABLES DE JETONS D'AUTHENTIFICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.09.2011 US 201161530018 P
27.08.2012 US 201213595438**

(43) Date of publication of application:
**09.07.2014 Bulletin 2014/28**

(73) Proprietor: **Protegrity Corporation
Stamford, CT 06905 (US)**

(72) Inventors:
• **PRENEEL, Bart Karel, Benedikt
Stamford, CT 06905 (US)**
• **MATTSSON, Ulf
Stamford, CT 06905 (US)**

(74) Representative: **Round, Edward Mark
Marks & Clerk LLP
90 Long Acre
London WC2E 9RA (GB)**

(56) References cited:
**WO-A1-2009/023384     US-A1- 2008 019 527
US-A1- 2008 019 527     US-A1- 2009 249 082
US-A1- 2009 313 477     US-A1- 2010 257 612
US-A1- 2010 325 443     US-A1- 2011 154 466
US-A1- 2011 274 273     US-B1- 6 507 846**

**Description**

FIELD OF ART

This application relates generally to the field of data protection, and more specifically to the tokenization of data using multiple token tables.

BACKGROUND

Many challenges exist in handling sensitive data, such as credit card numbers, social security numbers, bank account numbers, driving license numbers, and the like. In use, a system for processing such sensitive data transmits the sensitive data between multiple authorized entities, any of which can store the sensitive data. For example, in a retail environment, a user may swipe a credit card at a register, the register may transmit the credit card number to a local server, the local server may transmit the credit card number to a bank, and so forth. In this example, the credit card number may be stored at the register, the local server, the bank, and at any other entity implemented within such a retail environment. In such a system, the sensitive data is vulnerable to interception by unauthorized entities at multiple points, such as during each transmission between authorized entities or while stored at any authorized entity. Prior art solutions are disclosed in documents: US 2008/0019527 A1, US 2011/0154466 A1, WO 2009/023384 A1 and US 2010/0257612 A1,

To prevent unauthorized access to sensitive data, steps can be taken to protect the sensitive data. Such data protection measures are required by many jurisdictions for various categories of sensitive data. The sensitive data can be encrypted during transmission or storage using an encryption algorithm and encryption key, but encryption can be broken using a variety of methods. Data storage security measures can be implemented while the sensitive data is stored at an authorized entity, but such storage security measures generally protect against intrusion by an unauthorized entity and don't protect the sensitive data after the unauthorized entity has overridden or bypassed the storage security measures.

SUMMARY

Sensitive data is tokenized using multiple token tables, and stored in its tokenized form, as defined in the appended claims. Input data is received from a device, such as a terminal, computer, database, or the like, for instance as part of a tokenization request, and then split into a first input data portion and a second input data portion. An initialization vector is generated based on the first input data portion and a first set of token tables. The second data portion is tokenized based on the initialization vector and a second set of token tables. The first input data portion and the tokenized second input data portion are concatenated to form tokenized data, which is then stored at a storage device.

A tokenization key can be received as part of a tokenization request. The first and second set of token tables can be generated based on a received tokenization key, for instance using the Knuth shuffle algorithm with inputs generated use AES seeded with the tokenization key. The sets of token tables can be stored for subsequent use. Instead of including a tokenization key, a tokenization request can identify previously generated sets of token tables for use in tokenization.

The initialization vector can be generated by querying a first token table with the first input data portion and using the token table output as the initialization vector. Alternatively, the initialization vector can be generated by iteratively querying token tables in the first set of token tables, where the output from a first token table can be used as an input to query a second token table, beginning with the first input data portion, and where the output from the last token table in the iteration is used as the initialization vector. The second input data portion can be tokenized by modifying the second input data portion with the initialization vector (for instance, by adding the initialization vector to the second input data portion using module 10 addition), and a second token table can be queried with the modified second input data portion to produce a tokenized data portion. Multiple iterations of tokenization can be performed using multiple token tables, where the output from one token table can be modified by an initialization vector and used as an input for a next token table.

Tokenization requests can also include a tokenization scheme for use in the requested tokenization. The tokenization scheme can specify, for example, a tokenization type, a number of tokenization iterations, a method of generating initialization vectors, a method of generating token tables, or any other tokenization component associated with the requested tokenization. A received tokenization scheme can be stored for use in subsequent tokenization requests.

BRIEF DESCRIPTION OF DRAWINGS

Fig. 1 is a data flow diagram for a tokenization system, according to one embodiment.
Fig. 2 illustrates a tokenization environment, according to one embodiment.
Fig. 3 illustrates an example tokenization operation, according to one embodiment.
Fig. 4 illustrates an example tokenization operation, according to one embodiment.
Fig. 5 is a flowchart of a process for tokenizing data using two sets of token tables, according to one embodiment.

The figures depict embodiments for purposes of illustration only. One skilled in the art will readily recognize from the following description that alternative embodiments of the structures and methods illustrated herein may be employed without departing from the principles of the invention described herein.

DETAILED DESCRIPTION

OVERVIEW

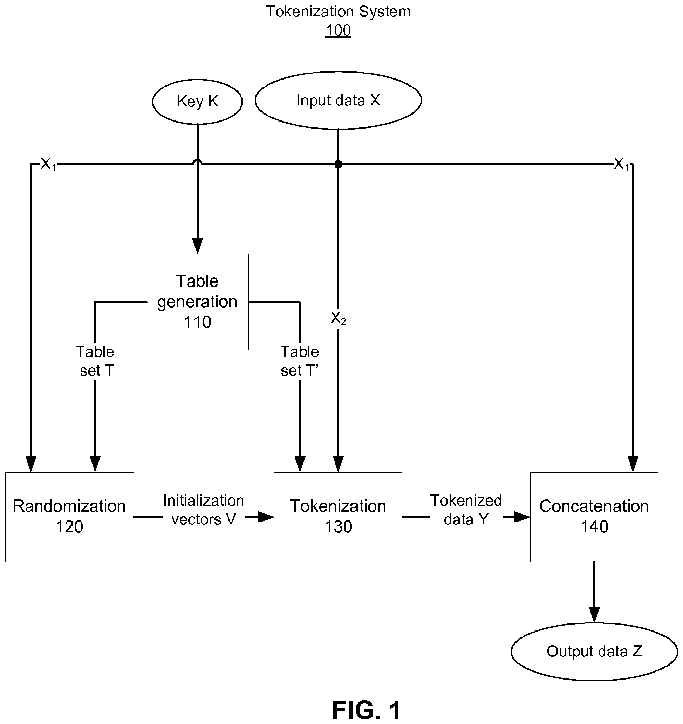

Fig. 1 is a data flow illustrating the overall data flow and operations for a tokenization system, according to one embodiment. In the tokenization system 100 of Fig. 1, input data X comprises at least a first set of digits, $X_1$, and a second set of digits, $X_2$. The input data can be pre-partitioned into $X_1$ and $X_2$, or the tokenization system can partition X into $X_1$ and $X_2$. $X_1$ and $X_2$ are referred to herein as first and second data portions, respectively. Reference is made herein to the input data X as a data string for the purposes of simplicity, but the input data X can take other forms, such as a number, a vector, a matrix, a set, and the like. Reference is also made herein to the input data X as a string of numeric digits for the purposes of simplicity, though it should be noted that the principles described herein apply when the input data X includes other types of data, such as alphanumeric characters, symbolic characters, and the like. It is understood that in all embodiments, all of the input, output and intermediate data is necessarily in computer readable form and is at all times electronically stored in a non-transitory computer memory (e.g., RAM) or storage device (e.g., hard disk).

In embodiments in which X is a string of numeric digits, $X_1$ and $X_2$ are substrings of numeric digits. $X_1$ and $X_2$ can include overlapping or non-overlapping digits of the input data X. In addition, $X_1$ and $X_2$ can include the same number of digits, or can include a different number of digits. For example, if X includes 12 digits, $X_1$ can include the first 6 digits and $X_2$ can include the last 6 digits; or $X_1$ can include the first 4 digits, and $X_2$ can include the last 8 digits. Further, in some embodiments (not shown), the input data X can include a third set of digits, $X_3$, that includes one or more digits of X that belong to neither $X_1$ nor $X_2$. Generally, $X_1$ and $X_2$ include sequentially-occurring digits of X, though in other embodiments not discussed herein, either $X_1$ or $X_2$ can include non-sequential digits of X, i.e., $X_1$ and $X_2$ can comprise interleaving digits, such as $X_1$ comprising digits in the odd numbered locations of X, and $X_2$ comprising digits in the even numbered locations of X. The number of digits in $X_1$ is referred to herein as $N_1$, and the number of digits in $X_2$ is referred to herein as $N_2$.

In the embodiment of Fig. 1, a key K is received at a table generation module 110. The table generation module generates a first set of token tables, table set T, and a second set of token tables, table set T', based on the received key K. Each table set includes one or more token tables. Each token table is a lookup table that includes an input column and an output column, and each input column value is mapped to an output column value, where the input value is a value in the domain to be tokenized (e.g., letters, digits, strings, etc.) and the output value is a token. The key K can be a secret key, for instance assigned in advance to a particular user or set of users of the tokenization system 100. Alternatively, the key K can be generated based on extrinsic characteristics of an instance of use of the tokenization system, for example, based on a time of use of the tokenization system, based on the identity of a user of the tokenization system, and the like. The key K can also be generated using a random number generator, such as a hardware or software random number generator. The key K can be generated based on previous keys, for instance using the method described in U.S. Patent No. 8,225,106. The key can contain characters of any format, for instance numeric characters, and can be any length, for instance 128 digits. The generation of sets of token tables is described in greater detail below.

The randomization module 120 receives the first substring $X_1$ and the first set of tables T, and generates one or more initialization vectors V based on $X_1$ and T. The initialization vectors V can be strings of digits for use in initializing the tokenization process, as described here. The randomization module can generate one initialization vector or a set of initialization vectors, or can generate multiple initialization vectors sequentially, for instance in embodiments where multiple sequential tokenizations are requested. Each initialization vector V can include multiple initialization vector components. For example, V can include a first portion $V_1$ and a second portion $V_2$ such that $V = [V_1][V_2]$. The randomization module can compute $V_1$ and $V_2$ separately, concatenating $V_1$ and $V_2$ together to form V, or can first compute V and split V into $V_1$ and $V_2$. The generation of initialization vectors by the randomization module is described in greater detail below.

The tokenization module 130 receives the second substring $X_2$, one or more initialization vectors V, and the second set of tables T', and generates the tokenized data Y therefrom. The tokenization module performs tokenization on the second substring $X_2$ using the second set of tables T', initializing the tokenization process using the initialization vector V, as is described in greater detail below. In embodiments described herein, the number $N_2$ of digits in $X_2$, is equal to the number $N_Y$ of digits of Y, though in other embodiments, this need not be the case. Each bit of $X_2$ is associated with a corresponding bit in Y. The tokenization module can use any form of tokenization, and can tokenize $X_2$ using one or multiple iterations of tokenization. The tokenization module can tokenize data such that the tokenized data Y preserves the data type and data format of the original input data X. The concatenation module 140 receives the tokenized data Y and the input string $X_1$ and concatenates them to form the output data Z. Output data Z is stored in a non-transitory computer readable storage medium, such as a memory or hard disk. The output data Z can then be used in place of the input data X to provide secure data for a desired application.

A tokenization performed by the tokenization system 100 is determined by parameters that are jointly referred to as a "tokenization scheme". A tokenization scheme can specify one or more of the following tokenization components for use in tokenization:

- a tokenization method describing a method of using token tables and initialization vectors to convert data into tokenized data;
- a number of tokenization iterations
- a number of initialization vectors for generation for use in tokenization
- an initialization vector generation method
- a pre-tokenization data modification performed based on initialization vectors
- a number of token tables for generation for use in tokenization
- a token table generation method
- identification of previously generated token tables
- an input size of generated or identified token tables (the number of digits in the input column of each token table)
- an output size of generated or identified token tables (the number of digits in the output column of each token table)
- a partition method for splitting X into $X_1$ and $X_2$
- a concatenation method for combining tokenized data Y and an original portion of X (for instance $X_1$);
- any other tokenization component associated with the requested tokenization.

Thus, different tokenization schemes can be defined using different values for some or all of the parameters, and stored as tokenization scheme data. The tokenization system 100 can retrieve stored tokenization scheme data and then be configured accordingly to tokenize sensitive data. For example, the tokenization system can apply a first tokenization scheme to a first set of data, a second tokenization scheme for a second, subsequent set of data, and so forth. A set of default tokenization parameters can also be defined and stored, and can be used when a requested tokenization scheme does not include certain parameters or when a tokenization scheme is not requested.

As mentioned, the concatenation module 140 concatenates the first substring $X_1$ and the tokenized data Y to produce the output data Z. In the embodiment where $X_1$ includes the leftmost digits of X, the output data Z is computed using the concatenation $Z = [X_1][Y]$. In the embodiment where $X_1$ includes the rightmost digits of X, the output data Z is computed using the concatenation $Z = [Y][X_1]$, In embodiments where $X_1$ includes middle digits of X and where $X_2$ includes outside digits of X, or vice versa, the concatenation module combines $X_1$ and Z such that each digit of $X_1$ appears in Z in the same place as that digit appears in X, and such that each digit of Y appears in Z in the same place as an associated digit of $X_2$ appears in X. That is, a digit in $X_1$ that appears in an $i^{th}$ position in X, will appear in the $i^{th}$ position in Z. In such embodiments, the concatenation module splits the digits of $X_1$ or of Y accordingly. For example, if

$$X = [a\ b\ c\ d\ e\ f\ g\ h],$$

$$X_1 = [c\ d\ e],$$

$$X_2 = [a\ b\ f\ g\ h],$$

and

$$Y = [l\ m\ n\ o\ p],$$

then

$$Z = [l\ m\ c\ d\ e\ n\ o\ p].$$

In this example, the first digit of $X_1$, c, appears in the third digit of X and hence appears as the third digit of Z; likewise, f is the third digit of $X_2$ but appears as the sixth digit of X, and hence appears in sixth digit of Z.

In the embodiment of Fig. 1, the output data Z includes original digits of $X_1$ as well as tokenized digits of $X_2$. It should be noted that embodiments of the tokenization system 100 that require protected data to maintain at least a portion of the original data (for instance, as a result of external data security rules), the inclusion of $X_1$ by the concatenation module 140 into the output data Z satisfies this requirement. Similarly, embodiments of the tokenization system that require protected data to preserve a format of the original data, such as a credit card number format, can select and use a format-preserving form of tokenization. For example, if external security rules required the tokenization system to maintain a social security number format [e.g., 123-45-6789], and required the tokenization system to preserve the final three digits of tokenized social security numbers, a tokenization scheme specifying that $X_2$ = [123456], $X_1$ = [789], and that specifies a type of tokenization that preserves the format of the social security number can be selected. In this example, the output data Z may equal [547-28-2789]. Thus, a tokenization scheme can be selected and used to protect data based on one or more security requirements.

In other embodiments, the output data Z does not include any original digits of the input data X. Thus, instead of splitting X into $X_1$ and $X_2$ and only tokenizing $X_2$, the entire string X is tokenized by tokenization module 130 using an initialization vector V, and the output of the tokenization module 130 in this case is used as output data Z. In this case, the initialization vector V can be generated based on data other than $X_1$. In addition, to further protect in the input data X, all or part of the output data Z can be encrypted using various forms of encryption. For example, $X_1$ can be encrypted and can be concatenated to Y by the concatenation module 140 such that the output data Z does not include any original portion of the input data X.

TOKENIZATION ENVIRONMENT

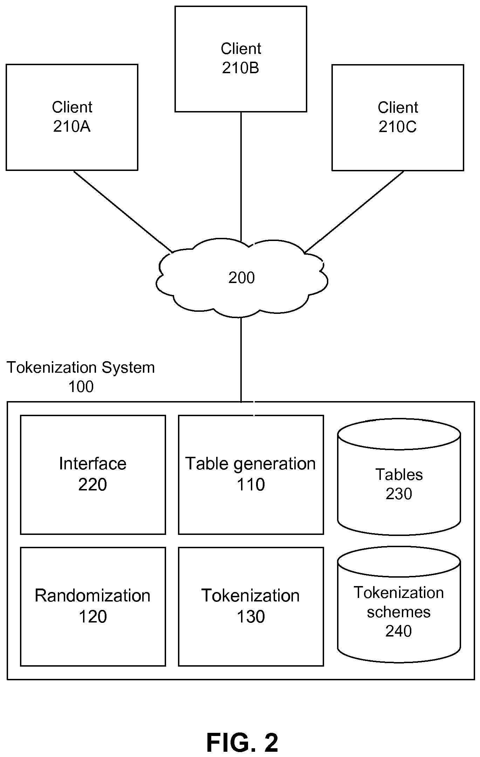

Fig. 2 illustrates a tokenization environment, according to one embodiment. The tokenization environment of Fig. 2 includes a tokenization system 100 and a plurality of clients, client 210A, 210B, and 210C (clients 210, collectively), communicatively coupled through a connecting network 200. In the embodiment of Fig. 2, the tokenization system 100 of Fig. 2 is the tokenization system 100 of Fig. 1. While only three clients are shown, in practice the environment can include any number of clients, and can include additional components not illustrated herein.

The clients 210 are entities capable of transmitting sensitive data to or receiving data from the tokenization system 100 via the connecting network 200. A client can be a device, such as a computer, a cash register, a server, a payment terminal, a mobile phone or device; can be a service, such as an online payment system; or can be any other entity, such as a user of the tokenization system, a credit card provider, a bank, a merchant, and the like. The clients interact with the tokenization system using software such as a web browser or other application with communication functionality. Such software can include an interface for communicating with the tokenization system via the connecting network. For example, client 210A can be a merchant terminal capable of receiving credit card information from a merchant customer, and client 210B can be a bank. In this example, a customer can swipe a credit card at the merchant terminal, the merchant terminal can receive the credit card's number, the tokenization system can tokenize the credit card number, and the tokenized credit card number can be sent to the bank.

The connecting network 200 is typically the Internet, but may be any network, including but not limited to a LAN, a MAN, a WAN, a mobile wired or wireless network, a private network, a virtual private network, a direct communication line, and the like. The connecting network can be a combination of multiple different networks. In such embodiments, the tokenization system can be implemented at, within, or co-located with a client. For example, if the tokenization system 100 is located at the client 210A, the connecting network includes a direct communication line between the tokenization system and the client 210A, and includes the internet between the tokenization system and the client 210B.

The tokenization system 100 includes an interface module 220, a table generation module 110 (for instance, the table generation module 110 of Fig. 1), a randomization module 120 (for instance, the randomization module 120 of Fig. 1), a tokenization module 130 (for instance, the tokenization module 130 of Fig. 1) a tables storage module 230, and a tokenization schemes module 240. Other conventional features, such as firewalls, load balancers, authentication servers, application servers, failover servers, site management tools, and so forth, can be included in other embodiments, but are not shown so as to more clearly illustrate the features of the tokenization system. It will be appreciated that the operations and processes of the tokenization system 100 are sufficiently complex and time consuming as to necessarily require their implementation in an digital computer system, and cannot be performed for practical, commercial purposes in the human mind by mental steps.

The interface module 220 provides the interface between the tokenization system and the clients 210. The interface module 220 receives input data from a first client, and returns tokenized data to the first client or to a second client. The interface module 220 can also receive a key from a client for use in tokenizing input data. The interface module 220 can receive any additional information associated with the tokenization of data or tokenization requests, such as login/password/verification information from clients, the identity of users of the tokenization system, time information associated with interactions, encryption keys, and the like. The interface module 220 can prompt a client for information in response to received input data or a received request for tokenization or tokenized data, and can include a graphic user interface (GUI) or any other communicative interface capable of display at or interaction with a client.

Tokenization requests are received at the tokenization system 100 from a client device 210. Tokenization can be explicitly requested (for instance, a merchant may request that a record be tokenized prior to storing the record), or can be automatically requested (for instance, by a ticket dispenser in response to the swiping of a credit card by a user). Tokenization requests include data to be tokenized (input data X) and can include a key K and any other information required for authentication or tokenization.

Tokenization requests can also specify a particular tokenization scheme to be used for the tokenization request. The specification of a tokenization scheme can be by description or reference. In the former case, the request includes various parameters of the tokenization scheme for use in the requested tokenization. When a described tokenization scheme is received at the tokenization system 100, the tokenization system 100 determines if its parameters match those of an existing tokenization scheme 100. If not, then this is a new tokenization schema, and the tokenization system 100 stores the new tokenization scheme to the tokenization scheme storage module 240 for subsequent usage, along with an identifier. The tokenization system 100 can return the tokenization scheme identifier to the requesting client 210. If the tokenization scheme is specified by reference using a tokenization scheme identifier, then the tokenization system 100 accesses the identified scheme from the tokenization scheme storage module 240.

If information associated with a tokenization scheme is not included in the tokenization request, or if information associated with various components of a tokenization scheme is not included in the tokenization request, a default tokenization scheme or default tokenization scheme components can be retrieved from tokenization scheme storage module 240 for use in the tokenization of input data X.

Token table generation

The table generation module 110 outputs a first set of token tables T to the randomization module 120 and outputs a second set of token tables T' to the tokenization module 130 in response to a tokenization request. The sets of token tables T and T' are generated by the table generation module based on a key K received in a tokenization request. Alternatively, a received tokenization request may not include a key K; in such embodiments, the table generation module can generate token tables based on information associated with tokenization request (such as the identity of the requesting user, the identity of a requesting client 210, the time of the tokenization request, and the like), or based on any other information (such as a previously stored key, a maintained tokenization operation count, and the like), or can retrieve previously generated token tables.

The table generation module 110 can generate token tables using a token table generation method identified in a requested tokenization scheme or using a default token table generation method. A token table generation method can specify information used to generate the token tables, the input and output size of the token tables to be generated, the number of token tables to be generated, the method used to generate the token tables, and the like. A token table generation method can also specify how frequently new sets of token tables are generated, and a method of generating such new sets of token tables based on current sets of token tables.

Token tables can be generated based on a key K received in a tokenization request, or based on other information, such as information associated with the tokenization request. For the purposes of simplicity, the remainder of the description herein will be limited to the generation of token tables based on a key K. The input size and the output size of the generated token tables can be identified in a requested tokenization scheme, can be based on a size of the received input data X or of the substrings $X_1$ or $X_2$, or can be based on default token table sizes. In one embodiment, the token tables generated in response to a tokenization request can have different input sizes, output sizes, or both. The token tables can be any type of token table, including static lookup tables (SLTs) and dynamic lookup tables (DLTs). Token tables are further described in U.S. Patent Publication No. 2009/0249082, filed March 26, 2008.

As noted above, each token table set T, T' includes one or more individual token tables, designated individually as $T_i$ and $T'_j$ as appropriate, where i and j can be the same or different depending on the number of token table in each set. The input column of each token table generated by the table generation module 110 includes all possible permutations of digits given the input size of the token table. For instance, if the input size of a token table is six decimal digits, the input column of the token table includes all $10^6$ combinations of decimal digits. The output column values of each token table can be generated using the Knuth shuffle algorithm. The inputs for the Knuth shuffle can be generated using a form of advanced encryption standard (such as AES-128) seeded with the key K, and the inputs generated by the AES and/or the seeding can vary for each token table generated. Instead of using the Knuth shuffle algorithm, any other method of generating token tables based on permutations of inputs can be used to generate output column values, or any method of generating random or pseudo-random values for use as output column values can be used. In addition, any other method of generating the inputs for the Knuth shuffle or for any other method of generating output column values can be used.

The number of tables generated by the table generation module 110 based on a tokenization request can be specified in a requested tokenization scheme or in a tokenization request (as noted above), can be based on information associated with the tokenization request, or can be based on a default number of tables. The table generation module 110 separately generates a first set of token tables, T, and a second set of token tables, T', or collectively generates a plurality of token tables that are subsequently partitioned into token table sets T and T'.

Each generated token table or set of token tables is stored in the tables storage module 230 for subsequent tokenization requests. Each stored token table or set of token tables is associated with a unique identifier. Instead of including a key K, a tokenization request or a requested tokenization scheme can include identifiers for one or more token tables or sets of token tables stored in the tables storage module. In such embodiments, the table generation module 110 outputs previously generated sets of token tables as T and T' identified by a tokenization request or a tokenization scheme.

The table generation module 110 generates token table sets in response to a tokenization request. In addition, the table generation module can generate new sets of token tables (either T, T', or both) periodically, for instance every day, hour, or other time period; after a set number of tokenization operations; after each tokenization operation; after a tokenization request from a new user; and the like. Upon generating new sets of token tables, or upon the providing of new sets of token tables to the randomization module 120 or the tokenization module 130, the table generation module can delete previous sets of token tables. The table generation module can generate sets of token tables in advance, beneficially reducing the potential for downtime that might otherwise occur when new sets of token tables are needed by the tokenization system 100.

It should be noted that in addition to generating the token table sets based on the key K, the token table sets can be generated using a random number generator. For example, each output column entry associated with a particular input column entry can be populated using the output of a random number generator configured to generate random numbers of a desired output size. Alternatively, token table sets can be generated based on previous token table sets. For example, a new token table set can be generated by performing the Knuth Shuffle algorithm on the output values of a current or previously used token table set.

Initialization vector generation

The randomization module 120 generates initialization vectors V for use in tokenization by the tokenization module 130, for instance in response to a tokenization request. The randomization module receives the substring $X_1$ and a first set of token tables T, and generates one or more initialization vectors V based on $X_1$ and T. It should be noted that although the term "initialization vector" is used herein, it is not necessary that the initialization vectors V be in vector form. For example, the initialization vectors can be strings of numeric digits, integer values, and the like.

The randomization module 110 generates initialization vectors using an initialization vector generation method identified in a requested tokenization scheme or using a default initialization vector generation method. An initialization vector generation method can specify a number of initialization vectors to be generated, a size of the initialization vectors to be generated, the method used to generated the initialization vectors, and the like.

The number of initialization vectors V generated by the randomization module 120 can be specified in a requested tokenization scheme or in a tokenization request, or can be based on the size of the substring $X_1$, the number of tables in the set of token tables T, a default number of initialization vectors, or any other factor related to the tokenization of the input data X. The size of the initialization vectors V (the number of digits in each initialization vector) can be specified in a requested tokenization scheme or in a tokenization request, or can be based on the size of the substring $X_1$, the number of tables in the set of token tables T, or any other factor related to the tokenization of the input data X. In one embodiment, for a tokenization request or scheme that involves multiple tokenization iterations by the tokenization module 130, the randomization module 120 sequentially produces one initialization vector V for each tokenization iteration performed by the tokenization module 130.

Using one method of generating an initialization vector V, the randomization module 120 selects one or more token tables from the table set T and queries the selected token tables using the substring $X_1$. The one or more token tables can be selected for instance, at random, in a predetermined order, based on a requested tokenization scheme or the tokenization request, or based any other factor related to the tokenization request. The randomization module queries the one or more selected token tables by inputting the substring $X_1$ into the selected token tables. Each queried token table matches $X_1$ to a value in its input column, and then obtains the corresponding value from its output column, and outputs this value. The output value can be used as an initialization vector V. For example, the input column of a first token table is queried with $X_1$, and an output column value $V_1$ is identified. $V_1$ can be output as the initialization vector V, or the process can continue for a second query iteration by querying a second token table with $V_1$ to identify a second output column value $V_2$. $V_2$ can be outputted as the initialization vector V, or the randomization module can continue through any number of token table query iterations (based, for example, on a requested tokenization scheme) before a token table output column value is outputted as the initialization vector V. In this example, token table queries are performed serially, with the output value of a first token table query being used as the input for a second token table query. In alternative embodiments, token table queries can be performed in parallel such that a first portion of $X_1$ is used to query a first token table and a second portion of $X_1$ is used to query a second token table, the outputs of which are concatenated together to form the initialization vector V.

In some embodiments, $X_1$ includes between 1 and 6 digits ($1 \leq N_1 \leq 6$). In these embodiments, the randomization module 120 can select a token table $T_1$ that maps $N_1$ digits to $2*N_2$ digits to generate an initialization vector V. To generate the initialization vector V in such embodiments, $T_1$ is queried with $X_1$, and the output value from $T_1$, $T_1(X_1)$, is used as the initialization vector V. In other embodiments, the randomization module similarly generates initialization vectors V for values of $X_1$ including more than 6 digits ($6 < N_1$).

In some embodiments, $X_1$ includes between 7 and 12 digits ($7 \leq N_1 \leq 12$). In these embodiments, a set of 16 token tables $T_1$, $T_2$, ..., $T_{16}$ are queried using a query value $m$ and a function $n = f_{g,h}(m)$ to generate an initialization vector V. Each token table $T_1$ to $T_{16}$ has an input size and an output size of 6, and g and h represent tables $T_g$ and $T_h$, respectively. For values of $X_1$ such that $N_1 = 12$, $m = X_1$. For values of $X_1$ such that $7 \leq N_1 < 12$, $m$ is the 12 leftmost or most significant bits of the string $[X_1][X_1]$,

The value $m$ is a 12-digit string, and is organized into four 3-digit strings as follows:

$$m_1 = m[11:9]$$

$$m_2 = m[8:6]$$

$$m_3 = m[5:3]$$

$$m_4 = m[2:0]$$

Similarly, the value of $n$ is a 12-digit string, and is organized into four 3-digit strings as follows:

$$n_1 = n[11:9]$$

$$n_2 = n[8:6]$$

$$n_3 = n[5:3]$$

$$n_4 = n[2:0]$$

The function $f_{g,h}$ is computed as follows:

$$[n_1][n_3] = T_g([m_1][m_2]) \qquad \text{Equation (1)}$$

$$[n_2][n_4] = T_h([m_3][m_4]) \qquad \text{Equation (2)}$$

In these embodiments, the initialization vector V is broken into two components, $v_1$ and $v_2$, such that $V = [v_1][v_2]$. The components $v_1$ and $v_2$ are computed using nested function $f_{g,h}$ computations as follows:

$$v_1 = f_{7,8}(f_{5,6}(f_{3,4}(f_{1,2}(m)))) \qquad \text{Equation (3)}$$

$$v_2 = f_{15,16}(f_{13,14}(f_{11,12}(f_{9,10}(m)))) \qquad \text{Equation (4)}$$

The token tables $T_1$ to $T_{16}$ can be selected and ordered randomly from among the set T. In an alternate embodiment, the initialization vector can be broken into two components such that $V = [v_2][v_1]$. In addition, variations of Equations (1) - (4) can be used, for instance variations with different combinations of $m_1$, $m_2$, $m_3$, $m_4$, $n_1$, $n_2$, $n_3$, and $n_4$, and with different orderings of function computations $f_{g,h}$. Variations of equations (1) - (4) can also be used for values of $X_1$ other than values such that ($7 \leq N_1 \leq 12$), and for token tables other than tables with an input size and an output size of 6. In other embodiments, different functions are used to compute the initialization vector V.

Tokenization

The tokenization module 130 receives the substring $X_2$, a second set of token tables T', and one or more initialization vectors V, and tokenizes the substring $X_2$ using the set of token tables T' and the initialization vectors V to produce the tokenized data Y. The type of tokenization and the number of tokenization iterations can be specified in the tokenization request, in a requested tokenization scheme, or in a default tokenization. Similarly, the selection of initialization vectors V for use in tokenization can be performed randomly, or can be based on a tokenization request, a requested tokenization scheme, or in a default initialization vector selection.

The tokenization module 110 tokenizes data using a tokenization method identified in a requested tokenization scheme or using a default tokenization method. A tokenization method can specify a pre-tokenization data modification for use in tokenization, the method used to tokenize data, a number of tokenization iterations, and the like.

The tokenization module 130 can modify the substring $X_2$ prior to tokenization based on the one or more initialization vectors V to produce a modified substring $X'_2$. The modification of $X_2$ based on the initialization vectors V can include the addition of initialization vectors V to $X_2$ prior to tokenization. For example, one or more initialization vectors V can be added to the substring $X_2$, for instance using digit-wise module 10 addition. Alternatively, the modification of $X_2$ based on the initialization vectors V can include the subtraction of one or more initialization vectors V from $X_2$, the multiplication of one or more initialization vectors V and $X_2$, or any other modifying operation between the initialization vectors V and $X_2$, arithmetic or otherwise. It should also be noted that portions of a substring $X_2$ can be modified based on portions of one or more initialization vectors V. In one embodiment, for tokenization including multiple tokenization iterations, the substring $X_2$ and each post-iteration token are modified by a different initialization vector V prior to subsequent tokenization. In other embodiments not described herein, the substring $X_2$ is not modified based on initialization vectors V. In these embodiments, post-iteration tokens can be modified by initialization vectors V prior to subsequent tokenization.

The tokenization module 130 tokenizes the modified substring $X'_2$ and produces the tokenized data Y. The tokenization module can perform any requested type of tokenization for any requested number of tokenization iterations. In embodiments where a tokenization request or a requested tokenization scheme do not specify a type of tokenization and a number tokenization iterations, a default tokenization type and number of iterations can be performed. For the purposes of simplicity, the description of the selection of token tables from the token table set T' used by the tokenization module in tokenization is limited to the random selection of token tables, though in other embodiments, token tables can be selected based on a tokenization request, a requested tokenization scheme, or a table selection default.

The tokenization module 130, for a tokenization iteration, can select a table, $T'_1$, from the token table set T'. In this embodiment, the tokenization module tokenizes the modified substring $X'_2$ by querying the selected table $T'_1$ with the modified substring $X'_2$ to identify an output column value, $Y_1$, in $T'_1$ associated with an input column value of $X'_2$. If no additional tokenization iterations are to be performed (for instance, if no additional iterations are requested), the tokenization module outputs $Y_1$ as the tokenized data Y. Alternatively, if additional tokenization iterations are requested, $Y_1$ is used as an input for a next tokenization iteration. For example, $Y_1$ is modified using one or more initialization vectors to produce a $Y'_1$, a second table $T'_2$ is selected from the token table set T', and $T'_2$ is queried using $Y'_1$ to produce $Y'_2$. This process is continued for $p$ iterations, after which $Y'_p$ is outputted as the tokenized data Y, where $p$ is a requested or default number of tokenization iterations to be performed.

The tokenization module 130 can tokenize $X_2$ using either 1 or 4 token tables randomly selected from T', referred to as $T'_1$, $T'_2$, $T'_3$, and $T'_4$, with an input size and output size of $N_2$ (the number of digits in $X_2$). In some embodiments, the number of digits in $X_2$ may range from 1 to 6, ($1 \leq N_2 \leq 6$). In one embodiment, $X_2$ is modified by an initialization vector V (broken into components such that V = [$v_1$][$v_2$]) and tokenized with the table T'$_1$ using the equation:

$$Y_q = v_2 + T'_1(v_1 + X_2) \qquad \text{Equation (5)}$$

In the embodiment of Equation (5), *q* represents an iteration index, and addition is performed digit-wise module 10.

Alternatively, $X_2$ can be modified by an initialization vector V = [$v_1$][$v_2$] and tokenized with the tables T'$_1$ - T'$_4$ using the equation:

$$Y_q = v_1 + T'_4(v_2 + T'_3(v_1 + v_2 + T'_2(v_2 + T'_1(v_1 + X_2)))) \qquad \text{Equation (6)}$$

In the embodiment of Equation (6), *q* represents an iteration index, and addition is performed digit-wise module 10. In the embodiments of Equations (5) and (6), for each subsequent tokenization iteration after the first iteration, the value $Y_q$ is used in place of the substring $X_2$.

In embodiments in which $X_2$ includes 12 digits ($N_2$ = 12), the tokenization module 130 can tokenize X2 using 8 token tables randomly selected from T', referred to as T'$_1$, T'$_2$, T'$_3$, T'$_4$, T'$_5$, T'$_6$, T'$_7$, and T'g, each with an input size and an output size of 6. In these embodiments, $X_2$ is modified by an initialization vector V = [$v_1$][$v_2$] and tokenized with the tables T'$_1$ - T'$_8$ using a variant of the function $f_{g,h}$ as follows:

$$Y_q = v_1 + f_{7,8}(v_2 + f_{5,6}(v_1 + v_2 + f_{3,4}(v_2 + f_{1,2}(v_1 + X_2)))) \qquad \text{Equation (7)}$$

In the embodiment of Equation (7), q represents an iteration index, addition is performed digit-wise module 10, and the function $f_{g,h}$ is computed using tables T'g and T'h instead of $T_g$ and $T_h$, respectively. It should be noted that variants of the tokenization of the embodiment of Equation (7) can be performed for substrings $X_2$ with ($N_1 \neq 12$).

In embodiments in which $X_2$ includes 16 digits ($N_2$ = 16), the tokenization module 130 can tokenize $X_2$ using 16 token tables, T'$_1$, T'$_2$, ..., T'$_{16}$, each with an input size and an output size of 6, and using a function $u = r_{s,t}(w)$. The indexes *r* and *s* represent tables T'$_r$ and T'$_s$, respectively. The values *u* and *w* represent 16 digit strings, each organized into eight 2-digit strings as follows:

$$u_1 = u[15:14]$$

$$u_2 = u[13:12]$$

$$u_3 = u[11:10]$$

$$u_4 = u[9:8]$$

$$u_5 = u[7:6]$$

$$u_6 = u[5:4]$$

$$u_7 = u[3:2]$$

$$u_8 = u[1:0]$$

$$w_1 = w[15:14]$$

$$w_2 = w[13:12]$$

$$w_3 = w[11:10]$$

$$w_4 = w[9:8]$$

$$w_6 = w[5:4]$$

$$w_7 = w[3:2]$$

$$w_8 = w[1:0]$$

The function $r_{s,t}$ is computed as follows:

$$[u_4][u_2][u_8] = T'_t([w_4][w_5][w_6]) \qquad \text{Equation (9)}$$

$$u_3 = w_7 \qquad \text{Equation (10)}$$

$$u_6 = w_8 \qquad \text{Equation (11)}$$

In these embodiments, $X_2$ is modified by an initialization vector $V = [v_1][v_2]$ and tokenized with the tables $T'_1$ - $T'_{16}$ using the function $r_{s,t}$ as follows:

$$Y_q = v_1 + r_{15,16}(v_2 + r_{13,14}(v_1 + v_2 + r_{11,12}(v_2 + r_{9,10}(v_1 + r_{7,8}(v_2 + r_{5,6}(v_1 + v_2 + r_{3,4}(v_2 + r_{1,2}(v_1 + X_2)))))))))$$

$$\text{Equation (12)}$$

In the embodiment of Equation (12), $q$ represents an iteration index, and addition is performed digit-wise module 10. It should be noted that variants of the tokenization of the embodiment of Equation (12) can be performed for substrings $X_2$ with ($N_1 \neq 16$).

Once the tokenization module 130 generates the tokenized data Y, the tokenized data Y can is outputted as output data Z. The tokenized data Y can be outputted as output data Z without further modification, or can be modified prior to being outputted as output data Z. In one embodiment, the tokenized data Y is combined with an original portion of the input data X (such as the substring $X_1$) before being outputted as output data Z. For example, if the input data X = $[X_1][X_2]$, the tokenized data Y can be combined with $X_1$ such that Z = $[X_1][Y]$. Similarly, if the input data X = $[X_2][X_1]$, the tokenized data Y can be combined with $X_1$ such that Z = $[Y][X_1]$, In one embodiment, a transformation or function can be applied to either Y or the combination of Y and $X_1$ before being outputted as output data Z, such as an encryption function, a format transformation, and the like.

Operation

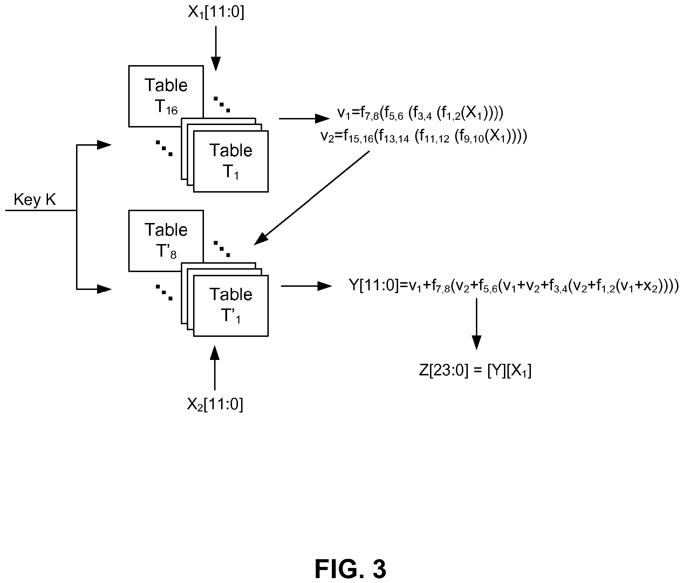

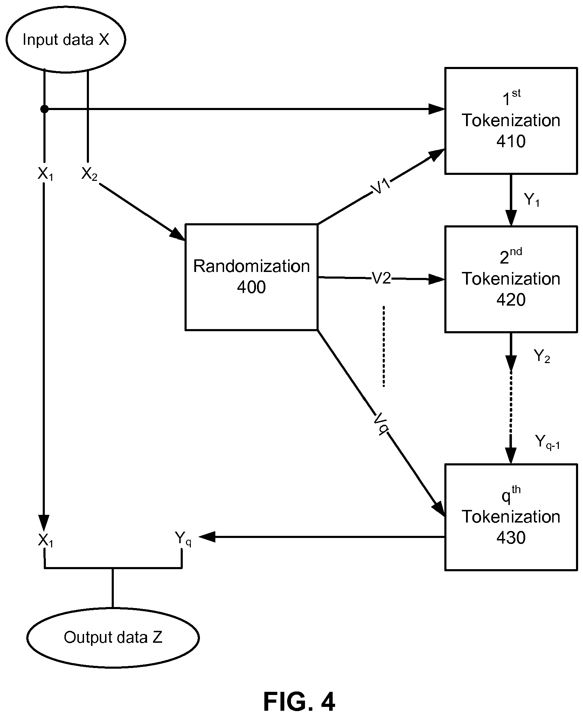

Figs. 3 and 4 illustrate example tokenization operations, according to various embodiments. In the embodiment of Fig. 3, the input data X is 24 digits, and is split into substrings $X_1$ and $X_2$ such that ($N_1 = N_2 = 12$). A first set of tables T and a second set of tables T' are generated based on a received key K, with T including at least 16 tables, $T_1$, $T_2$, ..., $T_{16}$, and T' including at least 8 tables, $T'_1$, $T'_2$, ..., T'g. Each table in T and T' includes an input size and an output size of 6. An initialization vector V = $[v_1][v_2]$ is computed based on tables $T_1$ through $T_{16}$ and $X_1$ using Equations (3) and (4). The substring $X_2$ is tokenized based on tables $T'_1$ through $T'_8$ and the initialization vector V = $[v_1][v_2]$ using Equation (7) to produce the tokenized data Y, such that Y is 12 digits in size. The tokenized data Y is concatenated with the substring

$X_1$ to produce the output data Z, such that Z = [Y][$X_1$],

In the embodiment of Fig. 4, $q$ successive tokenization iterations are performed on the input data X. The input data X is split into substrings $X_1$ and $X_2$. The substring X1 is sent to the randomization module 400, which produces $q$ initialization vectors, V1, V2, ..., Vq, one for each tokenization iteration. The substring $X_2$ and the initialization vector V1 are sent to the 1st tokenization module 410, which tokenizes the substring $X_2$ into the tokenized data $Y_1$. The tokenized data $Y_1$ and the initialization vector V2 are sent to the 2nd tokenization module 420, which tokenizes the tokenized data $Y_1$ into the tokenized data $Y_2$. The tokenization process continues iteratively, with each tokenized data output of a tokenization module serving as the input for the next tokenization module, and each tokenization module querying a successive token table in a set of token tables. Eventually, the tokenized data $Y_{q-1}$ and the initialization vector Vq are sent to the $q$th tokenization module 430, which tokenizes the tokenized data $Y_{q-1}$ into the tokenized data $Y_q$. The substring $X_1$ and the tokenized data $Y_q$ are concatenated to form the output data Z, such that Z = [$X_1$][$Y_q$].

In the embodiments of Figs. 3 and 4, a tokenization request including or identifying a tokenization scheme can be received, for instance in conjunction with the input data X. In the embodiment of Fig. 3, the requested tokenization scheme can specify that substrings $X_1$ and $X_2$ each include 12-digits, that the first token table set T is to contain 16 tables, that the second token table set T' is to contain 8 tables, that all token tables include an input size and an output size of 6, that the initialization vector V is to be computed using equations (5) and (6) above, that the tokenized data Y is to be computed using Equation (7) above, that only one tokenization iteration is to be performed, and that the output data Z is to include the concatenation of Y and $X_1$. In the embodiment of Fig. 4, the requested tokenization scheme can specify that $q$ tokenization iterations are to be performed, that one initialization vector is to be generated for each iteration, and that the output data Z is to include the concatenation of $X_1$ and $Y_q$. The requested tokenization schemes of Figs. 3 and 4 can also include tokenization scheme components not illustrated in Figs. 3 and 4, such as the type of pre-tokenization data modification performed based on initialization vectors, the method for generating token tables, and the like.

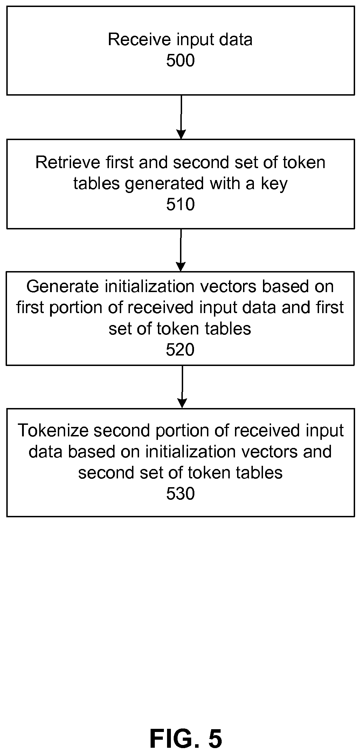

Fig. 5 is a flowchart of a process for tokenizing data using two sets of token tables, according to one embodiment. Input data is received 500. The input data can be received in conjunction with a requested tokenization scheme and/or with a key. A first and second set of token tables are retrieved 510. The first and second sets of token tables are generated based on a key. The key can be received with a tokenization request and the sets of tables can be generated based on the received key, or the sets of tables can have been previously generated based on a previously received key.

One or more initialization vectors are generated 520 based on a first portion of the received input data and the first set of token tables. An initialization vector can be generated by tokenizing the first portion of the received input data with a first token table to produce a first tokenized data output, tokenizing the first tokenized data output with a second token table to produce a second tokenized data output, and so forth for a pre-determined number of iterations until a final tokenized data output is produced for use as the initialization vector. A second portion of the received input data is tokenized 530 based on the initialization vectors and the second set of token tables. The second portion of the received input data can be modified based on the initialization vectors, and the modified second portion of the received input data can be used to query one or more tables in the second set of token tables to produce tokenized data. The method of generating the initialization vectors, the type of tokenization, and other details related to the tokenization can be specified in a requested tokenization scheme.

The present invention has been described in particular detail with respect to one possible embodiment. Those of skill in the art will appreciate that the invention may be practiced in other embodiments. First, the particular naming of the components and variables, capitalization of terms, the attributes, data structures, or any other programming or structural aspect is not mandatory or significant, and the mechanisms that implement the invention or its features may have different names, formats, or protocols. Also, the particular division of functionality between the various system components described herein is merely exemplary, and not mandatory; functions performed by a single system component may instead be performed by multiple components, and functions performed by multiple components may instead performed by a single component.

Some portions of above description present the features of the present invention in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times, to refer to these arrangements of operations as modules or by functional names, without loss of generality.

Unless specifically stated otherwise as apparent from the above discussion, it is appreciated that throughout the description, discussions utilizing terms such as "determine" refer to the action and processes of a computer system, or similar electronic computing device, that manipulates and transforms data represented as physical (electronic) quantities within the computer system memories or registers or other such information storage, transmission or display devices.

Certain aspects of the present invention include process steps and instructions described herein in the form of an algorithm. It should be noted that the process steps and instructions of the present invention could be embodied in software, firmware or hardware, and when embodied in software, could be downloaded to reside on and be operated from different platforms used by real time network operating systems.

The present invention also relates to an apparatus for performing the operations herein. This apparatus may be specially constructed for the required purposes, or it may comprise a general-purpose computer selectively activated or reconfigured by a computer program stored on a non-transitory computer readable medium that can be accessed by the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of computer-readable storage medium suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various general-purpose systems may also be used with programs in accordance with the teachings herein, or it may prove convenient to construct more specialized apparatus to perform the required method steps. The required structure for a variety of these systems will be apparent to those of skill in the art, along with equivalent variations. In addition, the present invention is not described with reference to any particular programming language. It is appreciated that a variety of programming languages may be used to implement the teachings of the present invention as described herein, and any references to specific languages are provided for invention of enablement and best mode of the present invention.

The present invention is well suited to a wide variety of computer network systems over numerous topologies. Within this field, the configuration and management of large networks comprise storage devices and computers that are communicatively coupled to dissimilar computers and storage devices over a network, such as the Internet.

Finally, it should be noted that the language used in the specification has been principally selected for readability and instructional purposes, and may not have been selected to delineate or circumscribe the inventive subject matter. Accordingly, the disclosure of the present invention is intended to be illustrative, but not limiting, of the scope of the invention, which is set forth in the following claims.

**Claims**

1.  A computer implemented method of tokenizing data, the method comprising:

    a) accessing input data to be tokenized, the input data comprising a first portion and a second portion;
    b) generating an initialization vector based on the first input data portion and a first set of token tables by selecting a first token table from the first set of token tables at random and querying the selected first token table with a value of the first input data portion to obtain the initialization vector, the first token table mapping each of a plurality of input values to a different token value, the initialization vector comprising the token value mapped to the value of the first input data portion;
    c) tokenizing the second input data portion based on the initialization vector and a second set of token tables;
    d) concatenating the first input data portion and the tokenized second input data portion to generate a tokenized data output; and
    e) storing the tokenized data output in a non-transitory computer readable storage medium,
    f) wherein tokenizing the second input data portion comprises:

       f-1) modifying the second input data portion based on the initialization vector to produce a modified second input data portion;
       f-2) selecting a second token table from the second set of token tables at random; and
       f-3) querying the selected second token table from the second set of token tables with a value of the modified second input data portion to produce a tokenized second input data portion, the second token table mapping each of a plurality of input values to a different token value, the tokenized second input data portion comprising the token value mapped to the value of the modified second input data portion.

2.  The computer implemented method of claim 1, further comprising:

    receiving a key for generating token tables; and
    generating the first set of token tables and the second set of token tables based on the key.

3.  The computer implemented method of claim 2, wherein the sets of token tables are generated using the Knuth shuffle algorithm with inputs generated using AES seeded with the key.

4. The computer implemented method of claim 2, wherein the sets of token tables are stored for subsequent use.

5. The computer implemented method of claim 1, further comprising:
retrieving the first set of token tables and the second set of token tables from storage.

6. The computer implemented method of claim 1, wherein the step of generating an initialization vector comprises:

querying the first token table with a first input data portion to produce a first token table output;
iteratively querying successive token tables with token table outputs from previous token tables to produce successive token table outputs for a pre-determined number of iterations; and
outputting the successive token table output from the last iterated token table as the initialization vector.

7. The computer implemented method of claim 1, wherein the step of generating an initialization vector comprises:

generating a first portion of an initialization vector based on querying the first token table with the first portion of the input data portion and querying a second token table with a second portion of the input data portion;
generating a second portion of an initialization vector based on querying a third token table with the first portion of the input data portion and querying a fourth token table with the second portion of the input data portion; and
concatenating the first portion of the initialization vector and the second portion of the initialization vector to produce the initialization vector.

8. The computer implemented method of claim 1, including utilizing a tokenization method comprising:

tokenizing a sum of a first portion of the initialization vector and the input data portion using a first token table to produce a first partial tokenized output;
tokenizing a sum of a second portion of the initialization vector and the first partial tokenized output using a second token table to produce a second partial tokenized output;
tokenizing a sum of the first portion of the initialization vector, the second portion of the initialization vector, and the second partial tokenized output using a third token table to produce a third partial tokenized output;
tokenizing a sum of the second portion of the initialization vector and the third partial tokenized output with a fourth token table to produce a fourth partial tokenized output; and
adding the first portion of the initialization vector and the fourth partial tokenized output to produce a tokenized output.

9. A non-transitory computer-readable storage medium having executable computer program instructions embodied therein for tokenizing data, the computer program instructions when executed on a computer, being capable of performing the method steps claimed in any one of claims 1 to 8.

**Patentansprüche**

1. Computerimplementiertes Verfahren zum Tokenisieren von Daten, wobei das Verfahren Folgendes umfasst:

a) Zugreifen auf zu tokenisierende Eingangsdaten, wobei die Eingangsdaten einen ersten Teil und einen zweiten Teil umfassen;
b) Erzeugen eines Initialisierungsvektors auf der Basis des ersten Eingangsdatenteils und eines ersten Satzes von Token-Tabellen durch randomisiertes Auswählen einer ersten Token-Tabelle aus dem ersten Satz von Token-Tabellen und Abfragen der ausgewählten ersten Token-Tabelle mit einem Wert des ersten Eingangsdatenteils, um den Initialisierungsvektor zu erhalten, wobei die erste Token-Tabelle jeden einer Vielzahl von Eingangswerten auf einen verschiedenen Token-Wert abbildet, wobei der Initialisierungsvektor den Token-Wert umfasst, der auf den Wert des ersten Eingangsdatenteils abgebildet ist;
c) Tokenisieren des zweiten Eingangsdatenteils auf der Basis des Initialisierungsvektors und eines zweiten Satzes von Token-Tabellen;
d) Verketten des ersten Eingangsdatenteils und des tokenisierten zweiten Eingangsdatenteils, um eine tokenisierte Datenausgabe zu erzeugen; und
e) Speichern der tokenisierten Datenausgabe in ein nichttransitorisches computerlesbares Speichermedium,

f) worin Tokenisieren des zweiten Eingangsdatenteils Folgendes umfasst:

f-1) Modifizieren des zweiten Eingangsdatenteils auf der Basis des Initialisierungsvektors, um einen modifizierten zweiten Eingangsdatenteil zu erzeugen;
f-2) randomisiertes Auswählen einer zweiten Token-Tabelle aus dem zweiten Satz von Token-Tabellen; und
f-3) Abfragen der ausgewählten zweiten Token-Tabelle aus dem zweiten Satz von Token-Tabellen mit einem Wert des modifizierten zweiten Eingangsdatenteils, um einen tokenisierten zweiten Eingangsdatenteil zu erzeugen, wobei die zweite Token-Tabelle jeden einer Vielzahl von Eingangswerten auf einen verschiedenen Token-Wert abbildet, wobei der tokenisierte zweite Eingangsdatenteil den Token-Wert umfasst, der auf den Wert des modifizierten zweiten Eingangsdatenteils abgebildet wird.

2. Computerimplementiertes Verfahren nach Anspruch 1, außerdem umfassend:

Empfangen eines Schlüssels zum Erzeugen von Token-Tabellen; und
Erzeugen des ersten Satzes von Token-Tabellen und des zweiten Satzes von Token-Tabellen auf der Basis des Schlüssels.

3. Computerimplementiertes Verfahren nach Anspruch 2, worin die Sätze von Token-Tabellen unter Verwendung des Knuth-Shuffle-Algorithmus erzeugt werden mit Eingaben, die unter Verwendung von AES mit dem Schlüssel als Startparameter erzeugt werden.

4. Computerimplementiertes Verfahren nach Anspruch 2, worin die Sätze von Token-Tabellen zur nachfolgenden Verwendung gespeichert werden.

5. Computerimplementiertes Verfahren nach Anspruch 1, außerdem umfassend:
Abrufen des ersten Satzes von Token-Tabellen und des zweiten Satzes von Token-Tabellen aus der Speicherung.

6. Computerimplementiertes Verfahren nach Anspruch 1, worin der Schritt des Erzeugens eines Initialisierungsvektors Folgendes umfasst:

Abfragen der ersten Token-Tabelle mit einem ersten Eingangsdatenteil, um eine erste Token-Tabellenausgabe zu erzeugen;
Iteratives Abfragen von aufeinanderfolgenden Token-Tabellen mit Token-Tabellenausgaben aus vorherigen Token-Tabellen, um aufeinanderfolgende Token-Tabellenausgaben für eine vorbestimmte Anzahl von Iterationen zu erzeugen; und
Ausgeben der aufeinanderfolgenden Token-Tabellenausgabe aus der letzten iterierten Token-Tabelle als den Initialisierungsvektor.

7. Computerimplementiertes Verfahren nach Anspruch 1, worin der Schritt des Erzeugens eines Initialisierungsvektors Folgendes umfasst:

Erzeugen eines ersten Teils eines Initialisierungsvektors auf der Basis von Abfragen der ersten Token-Tabelle mit dem ersten Teil des Eingangsdatenteils und Abfragen einer zweiten Token-Tabelle mit einem zweiten Teil des Eingangsdatenteils;
Erzeugen eines zweiten Teils eines Initialisierungsvektors auf der Basis von Abfragen einer dritten Token-Tabelle mit dem ersten Teil des Eingangsdatenteils und Abfragen einer vierten Token-Tabelle mit dem zweiten Teil des Eingangsdatenteils; und
Verketten des ersten Teils des Initialisierungsvektors und des zweiten Teils des Initialisierungsvektors, um den Initialisierungsvektor zu erzeugen.

8. Computerimplementiertes Verfahren nach Anspruch 1, mit Nutzung eines Tokenisierungsverfahrens, Folgendes umfassend:

Tokenisieren einer Summe eines ersten Teils des Initialisierungsvektors und des Eingangsdatenteils unter Verwendung einer ersten Token-Tabelle, um eine erste teilweise tokenisierte Ausgabe zu erzeugen;
Tokenisieren einer Summe eines zweiten Teils des Initialisierungsvektors und der ersten teilweise tokenisierten Ausgabe unter Verwendung einer zweiten Token-Tabelle, um eine zweite teilweise tokenisierte Ausgabe zu erzeugen;

Tokenisieren einer Summe des ersten Teils des Initialisierungsvektors, des zweiten Teils des Initialisierungsvektors und der zweiten teilweise tokenisierten Ausgabe unter Verwendung einer dritten Token-Tabelle, um eine dritte teilweise tokenisierte Ausgabe zu erzeugen;

Tokenisieren einer Summer des zweiten Teils des Initialisierungsvektors und der dritten teilweise tokenisierten Ausgabe mit einer vierten Token-Tabelle, um eine vierte teilweise tokenisierte Ausgabe zu erzeugen; und Addieren des ersten Teils des Initialisierungsvektors und der vierten teilweise tokenisierten Ausgabe, um eine tokenisierte Ausgabe zu erzeugen.

9. Nichttransitorisches computerlesbares Speichermedium mit ausführbaren Computerprogrammanweisungen, die darin ausgeführt werden zum Tokenisieren von Daten, wobei die Computerprogrammanweisungen, wenn sie auf einem Computer ausgeführt werden, dazu befähigt sind, die Verfahrensschritte nach einem der Ansprüche 1 bis 8 auszuführen.

**Revendications**

1. Procédé de tokénisation de données mis en oeuvre par ordinateur, le procédé comprenant :

a) l'accès à des données d'entrée qui doivent être tokénisées, les données d'entrée comprenant une première partie et une seconde partie ;

b) la génération d'un vecteur d'initialisation sur la base de la première partie de données d'entrée et d'un premier jeu de tables de jetons en sélectionnant une première table de jetons à partir du premier jeu de tables de jetons de façon aléatoire et en interrogeant la première table de jetons sélectionnée à l'aide d'une valeur de la première partie de données d'entrée de manière à obtenir le vecteur d'initialisation, la première table de jetons cartographiant chacune d'une pluralité de valeurs d'entrée sur une valeur de jeton différente, le vecteur d'initialisation comprenant la valeur de jeton cartographiée sur la valeur de la première partie de données d'entrée ;

c) la tokénisation de la seconde partie de données d'entrée sur la base du vecteur d'initialisation et d'un second jeu de tables de jetons ;

d) la concaténation de la première partie de données d'entrée et de la seconde partie de données d'entrée tokénisée de manière à générer une sortie de données tokénisée ; et

e) le stockage de la sortie de données tokénisée dans un support de stockage lisible par ordinateur non transitoire ;

f) dans lequel la tokénisation de la seconde partie de données d'entrée comprend :

f-1) la modification de la seconde partie de données d'entrée sur la base du vecteur d'initialisation de manière à produire une seconde partie de données d'entrée modifiée ;

f-2) la sélection d'une deuxième table de jetons à partir du second jeu de tables de jetons de façon aléatoire ; et

f-3) l'interrogation de la deuxième table de jetons sélectionnée à partir du second jeu de tables de jetons à l'aide d'une valeur de la seconde partie de données d'entrée modifiée de manière à produire une seconde partie de données d'entrée tokénisée, la deuxième table de jetons cartographiant chacune d'une pluralité de valeurs d'entrée sur une valeur de jeton différente, la seconde partie de données d'entrée tokénisée comprenant la valeur de jeton cartographiée sur la valeur de la seconde partie de données d'entrée modifiée.

2. Procédé mis en oeuvre par ordinateur selon la revendication 1, comprenant en outre :

la réception d'une clé pour générer des tables de jetons ; et la génération du premier jeu de tables de jetons et du second jeu de tables de jetons sur la base de la clé.

3. Procédé mis en oeuvre par ordinateur selon la revendication 2, dans lequel les jeux de tables de jetons sont générés en utilisant l'algorithme de brassage de Knuth avec des entrées qui sont générées en utilisant AES ensemencé avec la clé.

4. Procédé mis en oeuvre par ordinateur selon la revendication 2, dans lequel les jeux de tables de jetons sont stockés pour une utilisation subséquente.

5. Procédé mis en oeuvre par ordinateur selon la revendication 1, comprenant en outre :
l'extraction du premier jeu de tables de jetons et du second jeu de tables de jetons à partir du stockage.

**6.** Procédé mis en oeuvre par ordinateur selon la revendication 1, dans lequel l'étape de génération d'un vecteur d'initialisation comprend :

l'interrogation de la première table de jetons à l'aide d'une première partie de données d'entrée de manière à produire une première sortie de table de jetons ;

l'interrogation de façon itérative de tables de jetons successives à l'aide de sorties de table de jetons en provenance de tables de jetons précédentes de manière à produire des sorties de table de jetons successives pour un nombre prédéterminé d'itérations ; et

l'émission en sortie de la sortie de table de jetons successive à partir de la dernière table de jetons itérée en tant que vecteur d'initialisation.

**7.** Procédé mis en oeuvre par ordinateur selon la revendication 1, dans lequel l'étape de génération d'un vecteur d'initialisation comprend :

la génération d'une première partie d'un vecteur d'initialisation sur la base d'une interrogation de la première table de jetons à l'aide de la première partie de la partie de données d'entrée et sur la base d'une interrogation d'une deuxième table de jetons à l'aide d'une seconde partie de la partie de données d'entrée ;

la génération d'une seconde partie d'un vecteur d'initialisation sur la base d'une interrogation d'une troisième table de jetons à l'aide de la première partie de la partie de données d'entrée et sur la base d'une interrogation d'une quatrième table de jetons à l'aide de la seconde partie de la partie de données d'entrée ; et

la concaténation de la première partie du vecteur d'initialisation et de la seconde partie du vecteur d'initialisation de manière à produire le vecteur d'initialisation.

**8.** Procédé mis en oeuvre par ordinateur selon la revendication 1, incluant l'utilisation d'un procédé de tokénisation comprenant :

la tokénisation d'une somme d'une première partie du vecteur d'initialisation et de la partie de données d'entrée en utilisant une première table de jetons de manière à produire une première sortie tokénisée partielle ;

la tokénisation d'une somme d'une seconde partie du vecteur d'initialisation et de la première sortie tokénisée partielle en utilisant une deuxième table de jetons de manière à produire une deuxième sortie tokénisée partielle ;

la tokénisation d'une somme de la première partie du vecteur d'initialisation, de la seconde partie du vecteur d'initialisation et de la deuxième sortie tokénisée partielle en utilisant une troisième table de jetons de manière à produire une troisième sortie tokénisée partielle ;

la tokénisation d'une somme de la seconde partie du vecteur d'initialisation et de la troisième sortie tokénisée partielle à l'aide d'une quatrième table de jetons de manière à produire une quatrième sortie tokénisée partielle ; et

l'addition de la première partie du vecteur d'initialisation et de la quatrième sortie tokénisée partielle de manière à produire une sortie tokénisée.

**9.** Support de stockage lisible par ordinateur non transitoire comportant des instructions de programme informatique exécutables intégrées en son sein pour tokéniser des données, les instructions de programme informatique, lorsqu'elles sont exécutées sur un ordinateur, disposant de la capacité de réaliser les étapes de procédé telles que revendiquées selon l'une quelconque des revendications 1 à 8.

Tokenization System
100

**FIG. 1**

**FIG. 2**

$X_1[11:0]$

Table $T_{16}$

Table $T_1$

Key K

$v_1 = f_{7,8}(f_{5,6}(f_{3,4}(f_{1,2}(X_1))))$
$v_2 = f_{15,16}(f_{13,14}(f_{11,12}(f_{9,10}(X_1))))$

Table $T'_8$

Table $T'_1$

$Y[11:0] = v_1 + f_{7,8}(v_2 + f_{5,6}(v_1 + v_2 + f_{3,4}(v_2 + f_{1,2}(v_1 + x_2))))$

$Z[23:0] = [Y][X_1]$

$X_2[11:0]$

# FIG. 3

**FIG. 4**

21

```
┌─────────────────────────────────────┐
│         Receive input data          │
│                500                  │
└─────────────────────────────────────┘
                   │
                   ▼
┌─────────────────────────────────────┐
│   Retrieve first and second set of  │
│    token tables generated with a    │
│              key                    │
│                510                  │
└─────────────────────────────────────┘
                   │
                   ▼
┌─────────────────────────────────────┐
│  Generate initialization vectors    │
│  based on first portion of received │
│  input data and first set of token  │
│               tables                │
│                520                  │
└─────────────────────────────────────┘
                   │
                   ▼
┌─────────────────────────────────────┐
│  Tokenize second portion of         │
│  received input data based on       │
│  initialization vectors and second  │
│        set of token tables          │
│                530                  │
└─────────────────────────────────────┘
```

# FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080019527 A1
- US 20110154466 A1
- WO 2009023384 A1
- US 20100257612 A1
- US 8225106 B
- US 20090249082 A